# FASCICULE DE BREVET EUROPEEN

(11) **EP 4 065 358 B1**
(45) Date de publication et mention de la délivrance du brevet: **31.12.2025**
(21) Numéro de dépôt: 20824316.2
(22) Date de dépôt: 26.11.2020
(51) Int. Cl.: B29D 30/06, C08G 77/12, C08G 77/20, C08L 83/04, C09D 183/04

(54) **COMPOSITION DE CAOUTCHOUC SILICONE POUR REVETEMENT DE MEMBRANE DE CUISSON**
SILIKON-KAUTSCHUKZUSAMMENSETZUNG FÜR AUSHÄRTEMEMBRAN BESCHICHTUNG
SILICONE RUBBER COMPOSITION FOR A CURING MEMBRANE COATING

(30) Priorité: 29.11.2019 FR 1913473
(43) Date de publication de la demande: 05.10.2022
(73) Titulaire: COMPAGNIE GENERALE DES ETABLISSEMENTS MICHELIN, 63000 Clermont-Ferrand (FR)
(72) Inventeur: FEDURCO, Milan, 63040 CLERMONT-FERRAND Cedex 9 (FR); RIBEZZO, Marco, 63040 CLERMONT-FERRAND Cedex 9 (FR); DELFINO, Antonio, 63040 CLERMONT-FERRAND Cedex 9 (FR); FAUGERAS, Alain, 63040 CLERMONT-FERRAND Cedex 9 (FR)
(74) Mandataire: M.F.P. Michelin
(86) Numéro de dépôt international: PCT/FR2020/052197
(87) Numéro de publication internationale: WO 2021/105629

(56) Documents cités:
- EP-A1- 0 558 045
- EP-A1- 1 384 765
- JP-A- 2000 158 454
- US-A- 6 017 587
- US-A1- 2008 093 771
- US-A1- 2011 147 955

## Description

Le domaine de la présente invention est celui des compositions de caoutchouc silicone destinées à être utilisées comme revêtement sur une surface de caoutchouc diénique réticulée, notamment des membranes de cuisson expansibles.

Les membranes de cuisson expansibles pour la fabrication de pneumatique sont traditionnellement faites d'un matériau caoutchouteux qui est généralement une composition réticulée et renforcée de caoutchouc butyl, copolymère d'isobutylène et d'isoprène. Les compositions constitutives des membranes de cuisson traditionnellement utilisées sont donc de composition très proche des compositions de caoutchouc qui constituent la gomme intérieure des pneumatiques et qui entre en contact avec la surface de la membrane d'un moule de cuisson au moment de la cuisson du pneumatique.

En effet, les pneumatiques sont habituellement obtenus par moulage et vulcanisation d'une enveloppe crue à l'intérieur d'un moule de cuisson. Les parois externes de l'enveloppe sont plaquées contre les parois internes du moule de cuisson au moyen d'une membrane de cuisson expansible sous l'effet d'un fluide sous pression. Le dessin de la bande de roulement des garnitures du moule et celui des coquilles s'impriment sur l'enveloppe crue qui est vulcanisée à l'aide de la chaleur.

La membrane de cuisson se déploie à l'intérieur de l'enveloppe crue avant la cuisson et elle se replie à la fin de chaque cycle de cuisson. En raison de la similitude de leur composition chimique, la surface de la membrane et la surface de la gomme intérieure du pneumatique ont aussi tendance à se coller l'une à l'autre. Cette propension à se coller peut gêner le repliement de la membrane à la fin d'un cycle de cuisson, ainsi que l'opération de démoulage du pneumatique, ce qui se traduit dans les deux cas par une dégradation de la surface de la membrane de cuisson ou de la surface intérieure de la gomme intérieure du pneumatique. La surface de la membrane de cuisson qui entre au contact de la gomme intérieure du pneumatique est désignée ci-après par la surface extérieure de la membrane.

Par ailleurs, les cycles de déploiement et de repli de la membrane de cuisson à l'intérieur de l'enveloppe crue génèrent des phénomènes de glissement de la surface extérieure de la membrane sur la gomme intérieure du pneumatique. Les cycles répétés de glissement ont également pour conséquence de produire des déformations de l'enveloppe et l'usure de la membrane.

La cuisson du pneumatique libère des gaz tels que la vapeur d'eau dans le moule de cuisson, plus particulièrement entre la surface extérieure de la membrane et la surface de la gomme intérieure du pneumatique. Une accumulation de ces gaz qui seraient piégés entre la surface extérieure de la membrane et la gomme intérieure du pneumatique peut provoquer des surchauffes locales ou des surpressions locales sur la surface extérieure de la membrane ou sur la gomme intérieure, ce qui se traduit généralement par des défauts de moulage, défauts qui sont visibles à la surface de la gomme intérieure.

Pour limiter les défauts de moulage résultant de l'accumulation de gaz, il est prévu des évents dans la presse de cuisson pour faciliter l'évacuation des gaz.

Pour prévenir l'usure de la membrane et la déformation de l'enveloppe, notamment en empêchant leur adhésion l'une à l'autre, la gomme intérieure de l'enveloppe crue des pneumatiques est généralement enduite d'une solution à propriété anti-collante, par exemple à base de polymères silicones, et connue sous le nom de « badigeon » (en anglais « lining cement »). Un tel traitement est fait avant la cuisson, par un opérateur qui travaille sur un poste dédié, en sortie du procédé d'assemblage des semi-finis constitutifs du pneumatique. Cette opération s'avère très consommatrice de temps et de main d'œuvre.

Pour pallier ce problème, il a été proposé de supprimer cette étape en modifiant la membrane de cuisson, soit en enduisant sa surface extérieure avec une dispersion aqueuse d'une huile silicone non réactive et d'une poudre de caoutchouc silicone, soit en la recouvrant d'une composition de caoutchouc silicone réticulé. On peut par exemple se référer aux documents JP 2000-158454 et US 20080093771. La surface de la membrane étant recouverte par une composition de caoutchouc silicone réticulé, les défauts de moulage persistent.

Le brevet US 2011/147955 décrit une composition de caoutchouc silicone utilisée pour la formation de revêtements sur surface de cuivre dans la fabrication de semi-conducteur et comprenant un organopolysiloxane porteur de groupes alkylènes réticulables, un organopolysiloxane ayant des groupes SiH, un catalyseur d'hydrosilylation, des microparticules de silicone ayant un diamètre de 0.1-100 µm et un composé méthacrylate. Les particules de silicones sont présentes dans la composition selon une quantité de 30 à 80 parties en poids pour 100 parties en poids de mélange d'organopolysiloxanes.

Le brevet US 2011/147955 se réfère à une composition de caoutchouc silicone utilisée pour la préparation de revêtements sur surface polymérique et comprenant un organopolysiloxane porteur de groupes alkylènes réticulables, un organopolysiloxane comprenant des groupes SiH, un catalyseur d'hydrosilylation, 50 parties en parties de microparticules de silicone ayant un diamètre de 3 µm pour 100 parties en poids de silicones réticulables.

Le brevet US 6 017 587 décrit une composition de silicone utilisée pour la préparation de revêtements dans la fabrication de composés électroniques et comprenant un organopolysiloxane comprenant des groupes alkylènes réticulables, un organopolysiloxane comprenant des groupes SiH, un catalyseur d'hydrosilylation, 25 parties en parties de microparticules de silicone ayant un diamètre de 25 µm pour 100 parties en poids de silicones réticulables et de la silice hydrophobe.

Les compositions de caoutchouc silicone du brevet EP 0 558 045 présente une très faible adhérence lors de son application sur les rouleaux et comprennent un organopolysiloxane porteurs de groupes alkylènes réticulables, un organopolysiloxane comprenant des groupes SiH, un catalyseur d'hydrosilylation, 20 parties en parties de microparticules de silicone ayant un diamètre de 10 µm pour 100 parties en poids de silicones réticulables et 15 parties en poids de silice hydrophobe.

La Demanderesse a découvert qu'une composition de caoutchouc silicone comportant une poudre micrométrique de silicone permet de résoudre les problèmes mentionnés, lorsque la composition de caoutchouc silicone est constitutive d'une couche recouvrant la surface extérieure d'une membrane de cuisson.

Ainsi, un premier objet de l'invention est une membrane expansible pour moule de cuisson selon la revendication 1, ladite membrane étant constituée tout ou une partie d'un stratifié comprenant une première couche d'une composition de caoutchouc diénique et d'une deuxième couche d'une composition de caoutchouc silicone, la deuxième couche recouvrant directement la première couche, la première couche et la deuxième couche étant réticulées, la composition de caoutchouc diénique constitutive de la première couche comprenant un caoutchouc butyl, la composition de caoutchouc silicone comprenant une poudre micrométrique de silicone et un mélange d'organopolysiloxanes réticulables, la poudre micrométrique de silicone étant constituée de microparticules de caoutchouc silicone réticulé recouvertes d'un polyorganosilsesquioxane.

Un deuxième objet de l'invention est un procédé de fabrication d'un pneumatique qui comprend la cuisson d'une enveloppe crue d'un pneumatique dans un moule de cuisson équipée d'une membrane expansible conforme à l'invention.

### Description

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les élastomères, les plastifiants, les charges ...

Dans la présente demande, on entend par substance liquide une substance ayant la capacité de prendre à terme la forme de son contenant à température ambiante (23°C).

La composition de caoutchouc silicone selon l'invention a pour caractéristique essentielle de comprendre une poudre micrométrique de silicone. On entend par poudre micrométrique une poudre constituée de microparticules. La poudre micrométrique de silicone présente préférentiellement une taille moyenne allant de 5 à 100 µm, plus préférentiellement allant de 5 à 50 µm. L'analyse de la taille des microparticules peut être réalisée pour déterminer en particulier la taille moyenne des microparticules (ou diamètre médian pour des microparticules supposées sensiblement sphériques), notamment selon la norme ISO-8130-13.

Les poudres micrométriques de silicone sont des produits bien connus et sont par exemple décrites dans la demande de brevet US 5,538,793. Ce sont aussi des produits disponibles commercialement, par exemple sous les dénominations commerciales « KMP-594 », « KMP-597 », « KMP-598 », « KMP-600 », « KMP- 601 » and « KMP-602 » de Shin-Etsu Co. De préférence, la poudre micrométrique de silicone est constituée de microparticules de caoutchouc silicone réticulé recouvertes d'une résine silicone, la résine silicone étant un polyorganosilsesquioxane. Conviennent tout particulièrement les microparticules d'appellation commerciales « KMP-600 », « KMP- 601 » and « KMP-602 » de Shin-Etsu Co, encore plus particulièrement les microparticules d'appellation commerciales « KMP-602 ». La poudre micrométrique de silicone utile aux besoins de l'invention a préférentiellement une dureté Shore A inférieure à 60, plus préférentiellement inférieure à 50, encore plus préférentiellement comprise entre 20 et 40. De manière bien connue, la dureté Shore A est déterminée typiquement par la norme ASTM D 2240-97.

De préférence, la poudre micrométrique de silicone est présente dans la composition de caoutchouc silicone à un taux massique de 5 à 35% du poids total de la composition de caoutchouc silicone.

La composition de caoutchouc a pour autre caractéristique essentielle de comprendre un mélange d'organopolysiloxanes réticulables. Selon l'un quelconque des modes de réalisation de l'invention, le mélange d'organopolysiloxanes réticulables représente préférentiellement plus de 50% en masse de la composition de caoutchouc silicone.

La présence conjointe du mélange d'organopolysiloxanes et de la poudre micrométrique de silicone dans une composition de caoutchouc de silicone confère à la composition de caoutchouc silicone des propriétés qui la rendent appropriée pour une utilisation comme revêtement de la surface d'une membrane de cuisson expansible pour pneumatique destinée à entrer au contact de la gomme intérieure d'un pneumatique. Non seulement, le revêtement empêche la surface de la membrane de coller à la gomme intérieure du pneumatique, mais aussi favorise son glissement sur la surface de la gomme intérieure tout en facilitant l'évacuation des gaz de cuisson. Grâce aux propriétés du revêtement, les défauts de moulage sont supprimés, la membrane subit moins de dégradation à sa surface à chaque cycle de cuisson, ce qui permet de prolonger la durée de vie d'une membrane de cuisson expansible et d'augmenter le nombre de cycles de cuisson par membrane.

De préférence, le mélange d'organopolysiloxanes réticulables est un mélange d'un premier organopolysiloxane liquide et d'un deuxième organopolysiloxane liquide. Le premier organopolysiloxane a des motifs de répétition (R₂SiO_{2/2}) et a deux extrémités de chaîne portant chacune un groupe alcényle, le deuxième organopolysiloxane a des motifs de répétition (R'HSiO_{2/2}) et a deux extrémités de chaîne portant chacune un groupe SiR'₃O_{1/2}, les symboles R, identiques ou différents, représentant un groupe alkyle, aryle ou aralkyle, les symboles R', identiques ou différents, représentant un groupe alkyle.

De préférence, au moins l'un des premier organopolysiloxane et deuxième organopolysiloxane est à chaîne linéaire. De manière préférentielle, le premier organopolysiloxane et le deuxième organopolysiloxane sont à chaîne linéaire.

Le groupe alcényle en extrémité de chaîne du premier organopolysiloxane est préférentiellement un groupe vinyle. Les groupes représentés par les symboles R et R' contiennent préférentiellement 1 à 8 atomes de carbone, plus préférentiellement 1 à 3 atomes de carbone. Les symboles R dans les motifs (R₂SiO_{2/2}) représentent préférentiellement un alkyle. Le premier organopolysiloxane est préférentiellement un polydialkylsiloxane, plus préférentiellement un polydiméthylsiloxane. Le deuxième organopolysiloxane est préférentiellement un polyhydrométhylsiloxane. Les symboles R' dans SiR'₃O_{1/2} représentent préférentiellement un méthyle. Avantageusement, le deuxième organopolysiloxane est un polyhydrométhylsiloxane linéaire portant à ses extrémités de chaîne un groupe SiMe₃O_{1/2}.

Le premier organopolysiloxane a préférentiellement une masse moléculaire moyenne en poids supérieure à 5000 et inférieure à 200 000 g/mol, plus préférentiellement supérieure à 10 000 et inférieure à 150 000 g/mol. Le deuxième organopolysiloxane a préférentiellement une masse moléculaire moyenne en poids supérieure à 500 et inférieure à 30 000 g/mol, plus préférentiellement supérieure à 500 et inférieure à 10 000 g/mol, encore plus préférentiellement supérieure à 1000 et inférieure à 5000 g/mol.

Selon un mode de réalisation particulier de l'invention, le ratio entre le nombre de motifs (R'HSiO_{2/2}) et le nombre de groupes alcényles est supérieur à 5, préférentiellement supérieur à 15, plus préférentiellement supérieur à 25. Le ratio entre le nombre de motifs (R'HSiO_{2/2}) et le nombre de groupes alcényles est avantageusement inférieur à 100, plus avantageusement inférieur à 90. En particulier, le ratio entre le nombre de motifs (RHSiO_{2/2}) et le nombre de groupes alcényles est supérieur à 25 et inférieur à 90. A partir de ces ratios préférentiels sont ajustées en conséquence les quantités respectives du premier organopolysiloxane et du deuxième organopolysiloxane dans la composition selon l'invention. La composition de caoutchouc selon ce mode de réalisation particulier, y compris dans ses variantes préférentielles, peut être utilisée en tant que revêtement sur la surface d'une membrane de cuisson sans qu'il soit nécessaire au préalable d'appliquer un primaire d'adhésion à la surface de la membrane ou bien de procéder à un traitement au plasma ou corona.

De manière connue, la composition de caoutchouc silicone contient aussi de façon conventionnelle un catalyseur apte à catalyser la réticulation du mélange d'organopolysiloxanes réticulables. Lorsque la réticulation procède d'une réaction d'hydrosilylation, par exemple par réaction de motifs (R'HSiO_{2/2}) tels que définis précédemment sur des groupes alcényles, le catalyseur est un catalyseur d'hydrosilylation, typiquement au platine Pt(0) complexé par des ligands divinyltétraalkylsiloxane, de préférence 1,3-divinyltétraméthylsiloxane. De tels catalyseurs sont par exemple décrits dans le document WO 0142258 A1. Convient tout particulièrement le catalyseur de Karstedt. Comme dans toute réaction d'hydrosilylation conventionnelle, la quantité de catalyseur dans la composition est catalytique. Par quantité catalytique on entend moins d'un équivalent molaire de platine par rapport à la quantité d'insaturations de type double liaison oléfinique présentes dans la composition. De façon générale, il suffit d'introduire moins de 1000 ppm et de préférence plus de 30 ppm de platine calculé par rapport à la masse totale du premier organopolysiloxane et du deuxième organopolysiloxane. Ainsi selon certains modes de réalisation particuliers, la composition de caoutchouc silicone contient un catalyseur d'hydrosilylation apte à catalyser la réticulation du mélange d'organopolysiloxanes réticulables.

La réticulation est déclenchée typiquement en portant la composition de caoutchouc silicone à une température suffisante pour permettre la réticulation. Elle est conduite généralement à une température comprise entre 15 et 300°C, par exemple entre 20°C et 240°C, mieux encore entre 70 et 200°C.

Lorsque la réticulation procède d'une réaction d'hydrosilylation, les compositions de silicones réticulables contiennent de façon conventionnelle un inhibiteur. Les inhibiteurs sont généralement utilisés pour régler la température et le temps de la réaction de réticulation par hydrosilylation et maitriser ainsi davantage la réaction de réticulation, notamment son démarrage et sa vitesse. Si un inhibiteur de réticulation est utilisé, la quantité d'inhibiteur utilisée est préférentiellement de 1 à 50000 ppm, plus préférentiellement de 20 à 2000 ppm, et notamment de 100 à 1000 ppm, par rapport à la masse totale du premier organopolysiloxane et du deuxième organopolysiloxane. Comme inhibiteur conviennent tout particulièrement les alcools acétyléniques, comme le 1-éthynyl-1-cyclohexanol, le 2-méthyl-3-butyn-2-ol, le 3,5-diméthyl-1-hexyne-3-ol, le 3-méthyl-1-dodecyn-3-ol, le 2-phényl-3-butyn-2-ol. De préférence, la composition de caoutchouc silicone selon l'invention contient un inhibiteur.

Selon un autre mode de réalisation particulier de l'invention, la composition de caoutchouc silicone contient en outre une silice hydrophobe. Lorsque la composition de caoutchouc est destinée à être utilisée comme revêtement d'une membrane de cuisson, l'ajout de silice hydrophobe à la composition de caoutchouc silicone permet de conférer une meilleure résistance mécanique au revêtement qui conserve alors ses propriétés d'adhérence à la surface de la membrane de cuisson au cours de son utilisation. Ce résultat est obtenu malgré les déformations répétées de la membrane de cuisson qui se déploie et se replie sur elle-même à chaque cycle de cuisson.

De manière connue, une silice hydrophobe est une silice dont une partie de la surface est recouverte de groupes organiques tels que des groupes alkyles. La silice peut être toute silice renforçante connue de l'homme du métier, notamment toute silice précipitée ou pyrogénée. De préférence, la silice hydrophobe présente une surface spécifique BET inférieure à 450 m²/g, de manière préférentielle comprise dans un domaine allant de 80 à 400 m²/g, notamment de 100 à 300 m²/g, avantageusement de 150 à 250 m²/g. On peut aussi utiliser un mélange de plusieurs silices hydrophobes.

Pour rendre la silice hydrophobe, il est bien connu de modifier la surface de la silice. La modification de la surface d'une silice peut être obtenue de manière connue par réaction de la silice avec des composés qui portent des groupes hydrophobes comme les groupes trialkylsilyles, notamment triméthylsilyles. Convient tout particulièrement une silice qui présente une surface modifiée par des groupes triméthylsilyles, plus particulièrement une silice modifiée par l'hexaméthyldisilazane. Selon l'un quelconque des modes de réalisation de l'invention, la silice hydrophobe contient préférentiellement plus de 2% en masse de carbone, plus préférentiellement au moins 3% en masse de carbone.

Dans le présent exposé, la surface spécifique BET est déterminée par adsorption de gaz à l'aide de la méthode de Brunauer-Emmett-Teller décrite dans « The Journal of the American Chemical Society » (Vol. 60, page 309, février 1938), et plus précisément selon une méthode adaptée de la norme NF ISO 5794-1, annexe E de juin 2010 [méthode volumétrique multipoints (5 points) - gaz: azote - dégazage sous vide: une heure à 160°C - domaine de pression relative p/po : 0.05 à 0.17].

Le taux de silice hydrophobe est ajusté par l'homme du métier en fonction de sa surface spécifique et de l'usage de la composition de caoutchouc silicone. De préférence, la silice hydrophobe est présente dans la composition de caoutchouc silicone à un taux massique supérieur ou égal à 5% du poids total de la composition de caoutchouc silicone et inférieur ou égal à 40% du poids total de la composition de caoutchouc silicone. Lorsque la composition de caoutchouc silicone contient une silice hydrophobe, le taux total de poudre micrométrique de silicone et de silice hydrophobe varie préférentiellement de 10 à 45% du poids total de la composition de caoutchouc silicone.

Selon encore un autre mode de réalisation particulier de l'invention, la composition de caoutchouc silicone contient en outre des microparticules de polyamide qui présentent une température de fusion supérieure à 100°C. L'incorporation des microparticules de polyamide permet d'améliorer les propriétés de résistance au frottement de la composition de caoutchouc lorsqu'elle est utilisée comme revêtement de la surface d'une membrane de cuisson. Ce résultat est obtenu sans que le revêtement ne perde de sa souplesse pour pouvoir se déformer au gré des cycles de cuisson et puisse garder son adhérence à la surface de la membrane de cuisson malgré les déformations répétées de la membrane qui se déploie et se replie sur elle-même à chaque cycle de cuisson.

Les microparticules de polyamide peuvent être des produits disponibles commercialement, par exemple par la société Arkema telles que celles commercialisées sous le nom « Orgasol ». Les microparticules de polyamide peuvent être de toute forme, préférentiellement elles sont sphériques.

Les microparticules de polyamide présentent de préférence une température de fusion supérieure à 150°C. La température de fusion est conventionnellement mesurée selon la norme ASTM D3418-03. A titre de polyamides qui conviennent, on peut citer le nylon 6, le nylon 6,6, le nylon 6,10, le nylon 6,12, le nylon 11 et le nylon 12. Les microparticules de polyamide présentent de préférence une granulométrie de 5 à 100 µm, avantageusement de 10 à 70 µm. La granulométrie est déterminée typiquement selon la norme ISO 13319-2007. Le taux des microparticules de polyamide dans la composition de caoutchouc silicone est préférentiellement supérieur ou égal à 5% du poids total de la composition de caoutchouc silicone et inférieur ou égal à 15% du poids total de la composition de caoutchouc silicone. Lorsque la composition de caoutchouc silicone contient les microparticules de polyamide, le taux total de poudre micrométrique de silicone et de microparticules de polyamide varie préférentiellement de 10 à 45% du poids total de la composition de caoutchouc silicone.

Selon un autre mode de réalisation préférentiel, la composition de caoutchouc silicone contient à la fois une silice hydrophobe et des microparticules de polyamide, la silice et les microparticules de polyamide étant telles que définies dans les modes de réalisation particuliers précédemment décrits, y compris sous leurs variantes préférentielles, relatifs à l'introduction de silice hydrophobe et de microparticules de polyamide dans la composition de caoutchouc silicone. Lorsque la composition de caoutchouc silicone contient les microparticules de polyamide et la silice hydrophobe, le taux total de poudre micrométrique de silicone, de microparticules de polyamide et de silice varie préférentiellement de 10 à 45% du poids total de la composition de caoutchouc silicone.

La composition de caoutchouc silicone conforme à l'invention peut être préparée par l'incorporation de la poudre micrométrique de silicone au premier organopolysiloxane, suivie de l'addition du deuxième polyorganosiloxane sous mélangeage, enfin celle du catalyseur. Lorsqu'un inhibiteur est utilisé, il est typiquement ajouté au mélange de poudre micrométrique de silicone et du premier organopolysiloxane avant l'incorporation du deuxième organopolysiloxane. Pour faciliter le mélangeage, il est ajouté de préférence un solvant silicone, de préférence le décaméthylcyclopentasiloxane. L'ajout du solvant permet non seulement de faciliter l'incorporation des constituants de la composition de caoutchouc silicone et leur homogénéisation dans la composition de caoutchouc silicone, mais aussi d'ajuster la viscosité de la composition de caoutchouc silicone en vue de son application sur un substrat. Lorsque la composition de caoutchouc silicone est réticulée notamment après son application sur la surface d'un substrat, tout ou partie du solvant est éliminé au cours de la réticulation de la composition de caoutchouc silicone.

Lorsque la composition de caoutchouc contient une silice hydrophobe, la silice est préférentiellement incorporée au premier organopolysiloxane avant d'ajouter successivement le deuxième organopolysiloxane, puis les autres composants de la composition de caoutchouc.

La composition de caoutchouc silicone conforme à l'invention peut être à l'état cru (avant réticulation) ou l'état cuit (après réticulation). Lorsqu'elle est encore à l'état cru, elle est typiquement appliquée sous la forme d'une couche sur un substrat pour constituer un revêtement à la surface du substrat. L'application peut se faire à l'aide de pinceau, de brosse ou par projection (« spray » en anglais). A l'état cuit, elle se présente préférentiellement sous la forme d'un revêtement de la surface d'une membrane de cuisson. De préférence, la composition de caoutchouc silicone est réticulée. La composition de caoutchouc silicone réticulée se présente préférentiellement sous la forme d'une couche d'épaisseur allant de 10 à 500 µm, plus préférentiellement de 10 à 200 µm, plus préférentiellement de 10 à 100 µm.

Selon un mode de réalisation particulièrement préférentiel de l'invention, le substrat est un caoutchouc diénique ou une composition de caoutchouc diénique, le caoutchouc diénique étant préférentiellement un caoutchouc butyl.

L'invention concerne aussi un stratifié. Le stratifié conforme à l'invention comprend une première couche d'une composition de caoutchouc diénique et une deuxième couche d'une composition de caoutchouc silicone conforme à l'invention, décrite selon l'un quelconque des modes de réalisation de l'invention relatifs à la composition de caoutchouc silicone. Dans le stratifié conforme à l'invention, la deuxième couche recouvre directement la première couche. Par « la deuxième couche recouvre directement la première couche » on entend que la deuxième couche recouvre la première couche tout en étant à son contact. La deuxième couche peut recouvrir tout ou partie de la première couche. Avantageusement, la deuxième couche recouvre directement la totalité de la première couche. Dans le stratifié, la première couche et la deuxième couche sont réticulées. Préférentiellement, la composition de caoutchouc constitutive de la première couche comprend un caoutchouc butyl qui représente avantageusement plus de 90%, mieux 100% en masse de la totalité des élastomères de la composition de caoutchouc constitutive de la première couche. De préférence, la deuxième couche présente une épaisseur allant de 10 à 500 µm, plus préférentiellement de 10 à 200 µm, plus préférentiellement de 10 à 100 µm. L'épaisseur de la première couche est choisie par l'homme du métier selon l'usage qu'il est fait du stratifié. La première couche a typiquement une épaisseur allant de 1 à 10 mm, lorsque le stratifié est destiné à constituer tout ou partie une membrane expansible pour moule de cuisson d'un pneumatique.

Selon un mode de réalisation particulier de l'invention, le stratifié constitue tout ou partie une membrane expansible pour moule de cuisson d'un pneumatique, la deuxième couche présentant une épaisseur allant préférentiellement de 10 à 500 µm, plus préférentiellement de 10 à 200 µm, encore plus préférentiellement de 10 à 100 µm.

Les membranes de cuisson expansibles, notamment destinées à la fabrication de pneumatique sont bien connues de l'homme du métier. Elles sont constituées de compositions à base de caoutchouc butyl, halogéné ou non. Le caoutchouc butyl est un copolymère d'isobutylène et d'isoprène connu pour ses propriétés d'étanchéité. Une composition de caoutchouc constitutive d'une membrane de cuisson expansible contient généralement une charge renforçante telle qu'un noir de carbone. Elle contient aussi un système de réticulation composé d'une résine. Les systèmes de réticulation composés d'une résine et utilisés pour réticuler des compositions de caoutchouc pour membrane de cuisson expansible sont aussi bien connus de l'homme du métier. La résine est typiquement une résine phénolique, halogénée ou non. A titre de résine phénolique, on peut citer les résines formophénoliques. La composition de caoutchouc constitutive d'une membrane de cuisson peut comprendre divers ingrédients comme des antioxydants, des antiozonants, des pigments, des cires, des plastifiants comme des huiles de mise en œuvre.

Lorsque le stratifié est constitutif d'une membrane expansible pour moule de cuisson d'un pneumatique, la première couche du stratifié est destinée à entrer au contact de la gomme intérieure du pneumatique dans le moule de cuisson. Non seulement le stratifié empêche la membrane de coller à la gomme intérieure du pneumatique, mais aussi il favorise son glissement sur la surface de la gomme intérieure tout en facilitant l'évacuation des gaz de cuisson. Par conséquent, la membrane expansible pour moule de cuisson qui est constituée d'un stratifié conforme à l'invention et qui est un autre objet de l'invention, peut être utilisée pour plusieurs cycles de cuisson dans un moule de cuisson pour pneumatique sans qu'il ne soit observé des défauts de moulage, ce qui permet de réduire la fréquence de changement des membranes dans le moule de cuisson et ainsi d'augmenter la productivité d'un procédé de fabrication des pneumatiques. La membrane selon l'invention est typiquement une membrane destinée à être utilisée dans un moule de cuisson pour pneumatique.

En résumé, l'invention peut être mise en œuvre selon l'un quelconque des modes de réalisation 1 à 50 :
Mode 1 : Composition de caoutchouc silicone comprenant une poudre micrométrique de silicone et un mélange d'organopolysiloxanes réticulables.
Mode 2 : Composition de caoutchouc silicone selon le mode 1 dans laquelle la poudre micrométrique de silicone est présente à un taux massique de 5 à 35% du poids total de la composition de caoutchouc silicone.
Mode 3 : Composition de caoutchouc silicone selon l'un quelconque des modes 1 à 2 dans laquelle la poudre micrométrique de silicone a une taille moyenne de 5 à 100 µm.
Mode 4 : Composition de caoutchouc silicone selon l'un quelconque des modes 1 à 3 dans laquelle la poudre micrométrique de silicone a une taille moyenne de 5 à 50 µm.
Mode 5 : Composition de caoutchouc selon l'un quelconque des modes 1 à 4 dans laquelle la poudre micrométrique de silicone est constituée de microparticules de caoutchouc silicone réticulé recouvertes d'une résine silicone, la résine silicone étant un polyorganosilsesquioxane.
Mode 6 : Composition de caoutchouc silicone selon l'un quelconque des modes 1 à 5 dans laquelle la poudre micrométrique de silicone a une dureté Shore A inférieure à 60, préférentiellement inférieure à 50, plus préférentiellement comprise entre 20 et 40.
Mode 7 : Composition de caoutchouc silicone selon l'un quelconque des modes 1 à 6 dans laquelle le mélange d'organopolysiloxanes réticulables est un mélange d'un premier organopolysiloxane liquide et d'un deuxième organopolysiloxane liquide, le premier organopolysiloxane ayant des motifs de répétition (R₂SiO_{2/2}) et ayant deux extrémités de chaîne portant chacune un groupe alcényle, le deuxième organopolysiloxane ayant des motifs de répétition (R'HSiO_{2/2}) et ayant deux extrémités de chaîne portant chacune un groupe SiR'₃O_{1/2}, les symboles R, identiques ou différents, représentant un groupe alkyle, aryle ou aralkyle, les symboles R', identiques ou différents, représentant un groupe alkyle.
Mode 8 : Composition de caoutchouc silicone selon le mode 7 dans laquelle le groupe alcényle est un groupe vinyle.
Mode 9 : Composition de caoutchouc silicone selon l'un quelconque des modes 7 à 8 dans laquelle les groupes représentés par les symboles R et R' contiennent 1 à 8 atomes de carbone, préférentiellement 1 à 3 atomes de carbone.
Mode 10 : Composition de caoutchouc selon l'un quelconque des modes 7 à 9 dans laquelle les symboles R dans les motifs (R₂SiO_{2/2}) représentent un alkyle.
Mode 11 : Composition de caoutchouc silicone selon l'un quelconque des modes 7 à 10 dans laquelle au moins l'un des premier organopolysiloxane et deuxième organopolysiloxane est à chaîne linéaire.
Mode 12 : Composition de caoutchouc selon l'un quelconque des modes 7 à 11 dans laquelle le premier organopolysiloxane et le deuxième organopolysiloxane sont à chaîne linéaire.
Mode 13 : Composition de caoutchouc selon l'un quelconque des modes 7 à 12 dans laquelle le premier organopolysiloxane est un polydialkylsiloxane.
Mode 14 : Composition de caoutchouc selon l'un quelconque des modes 7 à 13 dans laquelle le premier organopolysiloxane est un polydiméthylsiloxane.
Mode 15 : Composition de caoutchouc silicone selon l'un quelconque des modes 7 à 14 dans laquelle le deuxième organopolysiloxane est un polyhydrométhylsiloxane.
Mode 16 : Composition de caoutchouc silicone selon l'un quelconque des modes 7 à 15 dans laquelle les symboles R' dans SiR'₃O_{1/2} représentent un méthyle.
Mode 17 : Composition de caoutchouc silicone selon l'un quelconque des modes 7 à 16 dans laquelle le premier organopolysiloxane a une masse moléculaire moyenne en poids supérieure à 5000 et inférieure à 200 000 g/mol, de préférence supérieure à 10 000 et inférieure à 150 000 g/mol.
Mode 18 : Composition de caoutchouc silicone selon l'un quelconque des modes 7 à 17 dans laquelle le deuxième organopolysiloxane a une masse moléculaire moyenne en poids supérieure à 500 et inférieure à 30 000 g/mol, de préférence supérieure à 500 et inférieure à 10 000 g/mol, de manière plus préférentielle supérieure à 1000 et inférieure à 5000 g/mol.
Mode 19 : Composition de caoutchouc silicone selon l'un quelconque des modes 7 à 18 dans laquelle le ratio entre le nombre de motifs (R'HSiO_{2/2}) et le nombre de groupes alcényles est supérieur à 5.
Mode 20 : Composition de caoutchouc silicone selon l'un quelconque des modes 7 à 19 dans laquelle le ratio entre le nombre de motifs (R'HSiO_{2/2}) et le nombre de groupes alcényles est supérieur à 15.
Mode 21 : Composition de caoutchouc silicone selon l'un quelconque des modes 7 à 20 dans laquelle le ratio entre le nombre de motifs (R'HSiO_{2/2}) et le nombre de groupes alcényles est supérieur à 25.
Mode 22 : Composition de caoutchouc silicone selon l'un quelconque des modes 7 à 21 dans laquelle le ratio entre le nombre de motifs (R'HSiO_{2/2}) et le nombre de groupes alcényles est inférieur à 100.
Mode 23 : Composition de caoutchouc silicone selon l'un quelconque des modes 7 à 22 dans laquelle le ratio entre le nombre de motifs (R'HSiO_{2/2}) et le nombre de groupes alcényles est inférieur à 90.
Mode 24 : Composition de caoutchouc silicone selon l'un quelconque des modes 7 à 23 dans laquelle le ratio entre le nombre de motifs (RHSiO_{2/2}) et le nombre de groupes alcényles est supérieur à 25 et inférieur à 90.
Mode 25 : Composition de caoutchouc silicone selon l'un quelconque des modes 1 à 24 dans laquelle le mélange d'organopolysiloxanes réticulables représente plus de 50% en masse de la composition de caoutchouc silicone.
Mode 26 : Composition de caoutchouc silicone selon l'un quelconque des modes 1 à 25, laquelle composition contient un catalyseur apte à catalyser la réticulation du mélange d'organopolysiloxanes réticulables.
Mode 27 : Composition de caoutchouc silicone selon l'un quelconque des modes 1 à 26, laquelle composition contient un catalyseur d'hydrosilylation apte à catalyser la réticulation du mélange d'organopolysiloxanes réticulables.
Mode 28 : Composition de caoutchouc silicone selon le mode 27 dans laquelle le catalyseur d'hydrosilylation est un catalyseur d'hydrosilylation au Pt(0) complexé par des ligands divinyltétraalkylsiloxane.
Mode 29 : Composition de caoutchouc silicone selon l'un quelconque des modes 27 à 28 dans laquelle le catalyseur d'hydrosilylation est le catalyseur de Karstedt.
Mode 30 : Composition de caoutchouc silicone selon l'un quelconque des modes 1 à 29, laquelle composition contient un inhibiteur.
Mode 31 : Composition de caoutchouc silicone selon l'un quelconque des modes 1 à 30 qui contient une silice hydrophobe ou des microparticules de polyamide qui présentent une température de fusion supérieure à 100°C ou contient à la fois une silice hydrophobe, des microparticules de polyamide qui présentent une température de fusion supérieure à 100°C
Mode 32 : Composition de caoutchouc silicone selon le mode 31 dans laquelle la silice hydrophobe présente une surface spécifique BET de 100 à 300 m²/g, de préférence de 150 à 250 m²/g.
Mode 33 : Composition de caoutchouc silicone selon le mode 31 ou 32 dans laquelle la silice hydrophobe est une silice présentant une surface modifiée par des groupes trialkylsilyles, avantageusement triméthylsilyles.
Mode 34 : Composition de caoutchouc silicone selon l'un quelconque des modes 31 à 33 dans laquelle la silice hydrophobe est une silice présentant une surface modifiée par l'hexaméthyldisilazane.
Mode 35 : Composition de caoutchouc silicone selon l'un quelconque des modes 31 à 34 dans laquelle la silice hydrophobe contient plus de 2% en masse de carbone, préférentiellement au moins 3% en masse de carbone.
Mode 36 : Composition de caoutchouc selon l'un quelconque des modes 31 à 35 dans laquelle la silice hydrophobe est présente à un taux massique supérieur ou égal à 5% du poids total de la composition de caoutchouc silicone et inférieur ou égal à 40% du poids total de la composition de caoutchouc silicone.
Mode 37 : Composition de caoutchouc silicone selon l'un quelconque des modes 31 à 36 dans laquelle les microparticules de polyamide présentent une température de fusion supérieure à 150°C.
Mode 38 : Composition de caoutchouc silicone selon l'un quelconque des modes 31 à 37 dans laquelle les microparticules de polyamide présentent une granulométrie de 5 à 100 µm.
Mode 39 : Composition de caoutchouc silicone selon l'un quelconque des modes 31 à 38 dans laquelle les microparticules de polyamide présentent une granulométrie de 10 à 70 µm.
Mode 40 : Composition de caoutchouc silicone selon l'un quelconque des modes 31 à 39 dans laquelle le taux des microparticules de polyamide est supérieur ou égal à 5% du poids total de la composition de caoutchouc silicone et inférieur ou égal à 15% du poids total de la composition de caoutchouc silicone.
Mode 41 : Composition de caoutchouc selon l'un quelconque des modes 31 à 40 dans laquelle le taux total de poudre micrométrique de silicone, de silice hydrophobe et de microparticules de polyamide varie préférentiellement de 10 à 45% du poids total de la composition de caoutchouc silicone.
Mode 42 : Composition de caoutchouc silicone selon l'un quelconque des modes 1 à 41, laquelle composition est réticulée.
Mode 43 : Stratifié comprenant une première couche d'une composition de caoutchouc diénique réticulée et une deuxième couche d'une composition de caoutchouc silicone définie à l'un quelconque des modes 1 à 42, la deuxième couche recouvrant directement la première couche, la composition de caoutchouc silicone de la deuxième couche étant réticulée.
Mode 44 : Stratifié selon le mode 43 dans lequel la composition de caoutchouc diénique réticulé de la première couche comprend un caoutchouc butyl.
Mode 45 : Stratifié selon le mode 44 dans lequel le caoutchouc butyl représente plus de 90% en masse de la totalité des élastomères de la composition de caoutchouc constitutive de la première couche, mieux 100% en masse de la totalité des élastomères de la composition de caoutchouc constitutive de la première couche.
Mode 46 : Stratifié selon l'un quelconque des modes 43 à 45 dans lequel la deuxième couche présente une épaisseur allant de 10 à 500 µm.
Mode 47 : Stratifié selon l'un quelconque des modes 43 à 46 dans lequel la deuxième couche présente une épaisseur allant de 10 à 200 µm.
Mode 48 : Stratifié selon l'un quelconque des modes 43 à 47 dans lequel la deuxième couche présente une épaisseur allant de 10 à 100 µm.
Mode 49 : Membrane expansible pour moule de cuisson, laquelle membrane est constituée tout ou partie d'un stratifié défini à l'un quelconque des modes 43 à 48.
Mode 50 : Procédé de fabrication d'un pneumatique qui comprend la cuisson d'une enveloppe crue d'un pneumatique dans un moule de cuisson équipée d'une membrane expansible définie selon le mode 49.

### Exemples

### Test d'allongement :

L'échantillon à tester est obtenu par un emporte-pièce de 10[mm] x 140[mm]. L'échantillon est placé dans un étau. A l'aide d'une pince et d'une règle de 300[mm], on étire l'échantillon jusqu'à avoir 100% de déformation. Cette déformation est faite 10x à une fréquence de 1 Hz.

### Test de frottement :

Il est effectué sur une barre en acier de rugosité environ 1.6. Diamètre 12[mm] et longueur 70[mm]. On place la barre verticalement dans l'étau. On prend l'échantillon déjà testé en allongement. On effectue des va-et-vient de l'échantillon avec une courbure de 180° côté traité (face de l'échantillon revêtue de la composition de caoutchouc silicone) contre la barre en exerçant une force de frottement de 5 kilogramme-force. On répète 20 cycles, un cycle correspondant à un va-et-vient à une fréquence comprise entre 1 et 2 Hz.

### Analyse :

Après le test d'allongement ou de frottement, l'échantillon est observé par analyse de microscopie à balayage (modèle FEG 250 de la société FEI/ThermoFischer, détecteur ETD Everhart Thornley detector, 1 kV) pour vérifier la présence ou non de fissures ou de décollement. L'analyse de microscopie permet d'estimer aussi l'épaisseur de la couche de la composition de caoutchouc silicone appliquée comme revêtement.

### Préparation des compositions de caoutchouc :

### Exemple 1 :

9.92 g de poudre micrométrique de silicone (KMP-602, Shin-Etsu) sont incorporés à un polydiméthysiloxane α,ω-vinyle (21.3 g, DMS V35 de masse moléculaire moyenne en poids de 49500, Gelest) par mélangeage d'une minute dans un mélangeur (« StateMix »). On ajoute ensuite une solution d'inhibiteur (21.62 mg, 1-éthynyl-1-cyclohexanol, Aldrich E51406) dans le décamethylcyclopentasiloxane (3.1 g, TCI Europe, D1890) par mélangeage d'une minute dans le mélangeur (« StateMix »). Dans le mélange résultant, on incorpore une solution de PHMS (1.82 g, poly(méthylhydro)siloxane, Mw 3200, référence 17,620-6, Sigma Aldrich ) dans le décamethylcyclopentasiloxane (10 g, TCI Europe, D1890) par mélangeage dans le mélangeur (StateMix). ). On ajoute pour terminer une solution du catalyseur Karstedt (75 µl, Aldrich 479519) dans le décamethylcyclopentasiloxane (53.7 g, TCI Europe, D1890). Le mélange résultant est homogénéisé dans le mélangeur (« State Mix ») 1 minute.

La composition de caoutchouc silicone ainsi obtenue est appliquée à l'aide d'un pinceau sous la forme d'une couche sur une membrane de cuisson à base de caoutchouc butyl. Le stratifié résultant est porté à 150°C pendant 30 minutes dans un four à air ventilé.

### Exemple 2 :

5.78 g de poudre micrométrique de silicone (KMP-602, Shin-Etsu) sont incorporés à un polydiméthysiloxane α,ω-vinyle (21.3 g, DMS V35 de masse moléculaire moyenne en poids de 49500, Gelest) par mélangeage d'une minute dans un mélangeur (« StateMix »). On ajoute ensuite une solution d'inhibiteur (21.62 mg, 1-éthynyl-1-cyclohexanol, Aldrich E51406) dans le décamethylcyclopentasiloxane (3.1 g, TCI Europe, D1890) par mélangeage d'une minute dans le mélangeur (« StateMix »). Dans le mélange résultant, on incorpore une solution de PHMS (1.82 g, poly(méthylhydro)siloxane, Mw 3200, référence 17,620-6, Sigma Aldrich ) dans le décamethylcyclopentasiloxane (10 g, TCI Europe, D1890) par mélangeage dans le mélangeur (StateMix). ). On ajoute pour terminer une solution du catalyseur Karstedt (75 µl, Aldrich 479519) dans le décamethylcyclopentasiloxane (45.5 g, TCI Europe, D1890). Le mélange résultant est homogénéisé dans le mélangeur (« State Mix ») 1 minute.

La composition de caoutchouc silicone ainsi obtenue est appliquée à l'aide d'un pinceau sous la forme d'une couche sur une membrane de cuisson à base de caoutchouc butyl. Le stratifié résultant est porté à 150°C pendant 30 minutes dans un four à air ventilé.

### Exemple 3 :

2.57 g de poudre micrométrique de silicone (KMP-602, Shin-Etsu) sont incorporés à un polydiméthysiloxane α,ω-vinyle (21.3 g, DMS V35 de masse moléculaire moyenne en poids de 49500, Gelest) par mélangeage d'une minute dans un mélangeur (« StateMix »). On ajoute ensuite une solution d'inhibiteur (21.62 mg, 1-éthynyl-1-cyclohexanol, Aldrich E51406) dans le décamethylcyclopentasiloxane (3.1 g, TCI Europe, D1890) par mélangeage d'une minute dans le mélangeur (« StateMix »). Dans le mélange résultant, on incorpore une solution de PHMS (1.82 g, poly(méthylhydro)siloxane, Mw 3200, référence 17,620-6, Sigma Aldrich ) dans le décamethylcyclopentasiloxane (10 g, TCI Europe, D1890) par mélangeage dans le mélangeur (StateMix). ). On ajoute pour terminer une solution du catalyseur Karstedt (75 µl, Aldrich 479519) dans le décamethylcyclopentasiloxane (39 g, TCI Europe, D1890). Le mélange résultant est homogénéisé dans le mélangeur (« State Mix ») 1 minute.

La composition de caoutchouc silicone ainsi obtenue est appliquée à l'aide d'un pinceau sous la forme d'une couche sur une membrane de cuisson à base de caoutchouc butyl. Le stratifié résultant est porté à 150°C pendant 30 minutes dans un four à air ventilé.

### Exemple 4 :

1.22 g de de poudre micrométrique de silicone (KMP-602, Shin-Etsu) sont incorporés à un polydiméthysiloxane α,ω-vinyle (21.3 g, DMS V35 de masse moléculaire moyenne en poids de 49500, Gelest) par mélangeage d'une minute dans un mélangeur (« StateMix »). On ajoute ensuite une solution d'inhibiteur (21.62 mg, 1-éthynyl-1-cyclohexanol, Aldrich E51406) dans le décamethylcyclopentasiloxane (3.1 g, TCI Europe, D1890) par mélangeage d'une minute dans le mélangeur (« StateMix »). Dans le mélange résultant, on incorpore une solution de PHMS (1.82 g, poly(méthylhydro)siloxane, Mw 3200, référence 17,620-6, Sigma Aldrich ) dans le décamethylcyclopentasiloxane (10 g, TCI Europe, D1890) par mélangeage dans le mélangeur (StateMix). On ajoute pour terminer une solution du catalyseur Karstedt (75 µl, Aldrich 479519) dans le décamethylcyclopentasiloxane (36.2 g, TCI Europe, D1890). Le mélange résultant est homogénéisé dans le mélangeur (« State Mix ») 1 minute.

La composition de caoutchouc silicone ainsi obtenue est appliquée à l'aide d'un pinceau sous la forme d'une couche sur une membrane de cuisson à base de caoutchouc butyl. Le stratifié résultant est porté à 150°C pendant 30 minutes dans un four à air ventilé.

### Exemple 5 :

Une silice hydrophobe (5.34 g, HDK-2000 , Wacker) est incorporée à un polydiméthysiloxane α,ω-vinyle (11.48 g, DMS V35 de masse moléculaire moyenne en poids de 49500, Gelest) par mélangeage d'une minute dans un mélangeur (« StateMix »). On ajoute ensuite une solution d'inhibiteur (11.65 mg, 1-éthynyl-1-cyclohexanol, Aldrich E51406) dans le décamethylcyclopentasiloxane (7 g, TCI Europe, D1890) par mélangeage d'une minute dans le mélangeur (« StateMix »). Dans le mélange résultant, on incorpore une solution de PHMS (0.98 g, poly(méthylhydro)siloxane, Mw 3200, référence 17,620-6, Sigma Aldrich ) dans le décamethylcyclopentasiloxane (8 g, TCI Europe, D1890) par mélangeage dans le mélangeur (StateMix). ). 1.98 g de poudre micrométrique de silicone (KMP-602, Shin-Etsu) sont incorporés et après mélangeage d'une minute dans le mélangeur (StateMix), on ajoute pour terminer une solution du catalyseur Karstedt (40.4 µl, Aldrich 479519) dans le décamethylcyclopentasiloxane (25.1 g, TCI Europe, D1890). Le mélange résultant est homogénéisé dans le mélangeur (« State Mix ») 1 minute.

La composition de caoutchouc silicone ainsi obtenue est appliquée à l'aide d'un pinceau sous la forme d'une couche sur une membrane de cuisson à base de caoutchouc butyl. Le stratifié résultant est porté à 150°C pendant 30 minutes dans un four à air ventilé.

### Exemple 6 :

Une silice hydrophobe (17.52 g, HDK-2000, Wacker) est incorporée à un polydiméthysiloxane α,ω-vinyle (37.85 g, DMS V35 de masse moléculaire moyenne en poids de 49500, Gelest) par mélangeage d'une minute dans un mélangeur (« StateMix »). On ajoute ensuite une solution d'inhibiteur (42 mg, 1-éthynyl-1-cyclohexanol, Aldrich E51406) dans le décamethylcyclopentasiloxane (44.59 g, TCI Europe, D1890) par mélangeage d'une minute dans le mélangeur (« StateMix »). Dans le mélange résultant (41.92 g), on incorpore une solution de PHMS (1.27 g, poly(méthylhydro)siloxane, Mw 3200, référence 17,620-6, Sigma Aldrich ) dans le décamethylcyclopentasiloxane (16.26 g, TCI Europe, D1890) par mélangeage dans le mélangeur (StateMix). Les microparticules de polyamide (3.36 g, « Orgasol ES3 Nat 3 », Arkema) sont ajoutées et le tout est mélangé au mélangeur 1 minute (State Mix). 5.7 g de poudre micrométrique de silicone (KMP-602, Shin-Etsu) sont incorporés et après mélangeage d'une minute dans le mélangeur (StateMix), on ajoute pour terminer une solution du catalyseur Karstedt (56.2 µl, Aldrich 479519) dans le décamethylcyclopentasiloxane (31.44 g, TCI Europe, D1890). Le mélange résultant est homogénéisé dans le mélangeur (« State Mix ») 1 minute.

La composition de caoutchouc silicone ainsi obtenue est appliquée à l'aide d'un pinceau sous la forme d'une couche sur une membrane de cuisson à base de caoutchouc butyl. Le stratifié résultant est porté à 150°C pendant 30 minutes dans un four à air ventilé.

La composition de caoutchouc silicone réticulée d'épaisseur 20-50 µm présente une bonne adhérence à membrane même après avoir subi successivement 10 élongations à 100% de déformation.

### Exemple 7 non conforme à l'invention :

L'exemple 7 diffère de l'exemple 5 en ce que le stratifié ne contient pas de poudre micrométrique de silicone.

### Exemple 8 non conforme à l'invention :

L'exemple 8 diffère de l'exemple 6 en ce que le stratifié ne contient pas de poudre micrométrique de silicone.

Les membranes de cuisson sont utilisées dans un moule de cuisson pour pneumatique pour cuire une enveloppe crue d'un pneumatique. Pour les membranes des exemples 7 et 8 non conformes à l'invention, en fin de cuisson du pneumatique et dès la fin du premier cycle de cuisson, on observe au démoulage des défauts de moulage sur la gomme intérieure du pneumatique cuit, tels que des aspérités, des trous, des replis.

Ces défauts de moulage ne sont pas observés pour les membranes des exemples conformes à l'invention, même après plusieurs cycles de cuisson. Par ailleurs, il est observé que les microparticules de polyamide et de silicone ne sont pas éliminées du revêtement par frottement. Les microparticules de polyamide et de silicone ne sont pas arrachées du revêtement lorsqu'il est soumis au test de frottement. Les membranes de cuisson conformes à l'invention peuvent donc être utilisées pendant plusieurs cycles de cuisson sans dégradation de leur surface extérieure et sans qu'il ne soit observé des défauts de moulage.

## Revendications

1. Membrane expansible pour moule de cuisson, laquelle membrane est constituée tout ou partie d'un stratifié comprenant une première couche d'une composition de caoutchouc diénique et une deuxième couche d'une composition de caoutchouc silicone, la deuxième couche recouvrant directement la première couche, la première couche et la deuxième couche étant réticulées, la composition de caoutchouc diénique constitutive de la première couche comprenant un caoutchouc butyl, la composition de caoutchouc silicone comprenant une poudre micrométrique de silicone et un mélange d'organopolysiloxanes réticulables, la poudre micrométrique de silicone étant constituée de microparticules de caoutchouc silicone réticulé recouvertes d'une résine silicone, la résine silicone étant un polyorganosilsesquioxane.

2. Membrane expansible pour moule de cuisson selon la revendication 1 dans laquelle la poudre micrométrique de silicone est présente à un taux massique de 5 à 35% du poids total de la composition de caoutchouc silicone.

3. Membrane expansible pour moule de cuisson selon l'une quelconque des revendications 1 à 2 dans laquelle le mélange d'organopolysiloxanes réticulables est un mélange d'un premier organopolysiloxane liquide et d'un deuxième organopolysiloxane liquide, le premier organopolysiloxane ayant des motifs de répétition (R₂SiO_{2/2}) et ayant deux extrémités de chaîne portant chacune un groupe alcényle, de préférence vinyle, le deuxième organopolysiloxane ayant des motifs de répétition (R'HSiO_{2/2}) et ayant deux extrémités de chaîne portant chacune un groupe SiR'₃O_{1/2}, les symboles R, identiques ou différents, représentant un groupe alkyle, aryle ou aralkyle, les symboles R', identiques ou différents, représentant un groupe alkyle.

4. Membrane expansible pour moule de cuisson selon la revendication 3 dans laquelle le premier organopolysiloxane est un polydialkylsiloxane, de préférence un polydiméthylsiloxane, et le deuxième organopolysiloxane est un polyhydrométhylsiloxane.

5. Membrane expansible pour moule de cuisson selon l'une quelconque des revendications 1 à 4 dans laquelle le mélange d'organopolysiloxanes réticulables représente plus de 50% en masse de la composition de caoutchouc silicone.

6. Membrane expansible pour moule de cuisson selon l'une quelconque des revendications 1 à 5 dans laquelle la composition de caoutchouc silicone contient une silice hydrophobe.

7. Membrane expansible pour moule de cuisson selon la revendication 6 dans laquelle la silice hydrophobe est présente dans la composition de caoutchouc silicone à un taux massique supérieur ou égal à 5% du poids total de la composition de caoutchouc silicone et inférieur ou égal à 40% du poids total de la composition de caoutchouc silicone.

8. Membrane expansible pour moule de cuisson selon l'une quelconque des revendications 1 à 7 dans laquelle la composition de caoutchouc silicone contient des microparticules de polyamide qui présentent une température de fusion supérieure à 100°C.

9. Membrane expansible pour moule de cuisson selon la revendication 8 dans laquelle les microparticules de polyamide présentent une température de fusion supérieure à 150°C.

10. Membrane expansible pour moule de cuisson selon l'une quelconque des revendications 8 à 9 dans laquelle le taux massique des microparticules de polyamide est supérieur ou égal à 5% du poids total de la composition de caoutchouc silicone et inférieur ou égal à 15% du poids total de la composition de caoutchouc silicone.

11. Procédé de fabrication d'un pneumatique qui comprend la cuisson d'une enveloppe crue d'un pneumatique dans un moule de cuisson équipée d'une membrane expansible définie selon l'une quelconque des revendications 1 à 10.

## Patentansprüche

1. Expandierbare Membran für Vulkanisationsformwerkzeug, wobei die Membran ganz oder teilweise aus einem Laminat besteht, das eine erste Schicht aus einer Dienkautschukzusammensetzung und eine zweite Schicht aus einer Silikonkautschukzusammensetzung umfasst, wobei die zweite Schicht die erste Schicht direkt bedeckt, wobei die erste und die zweite Schicht vernetzt sind, wobei die die erste Schicht bildende Dienkautschukzusammensetzung einen Butylkautschuk umfasst, wobei die Silikonkautschukzusammensetzung ein mikroskaliges Silikonpulver und eine Mischung von vernetzbaren Organopolysiloxanen umfasst, wobei das mikroskalige Silikonpulver aus Mikropartikeln von vernetztem Silikonkautschuk, die mit einem Silikonharz bedeckt sind, besteht, wobei es sich bei dem Silikonharz um ein Polyorganosilsesquioxan handelt.

2. Expandierbare Membran für Vulkanisationsformwerkzeug nach Anspruch 1, bei der das mikroskalige Silikonpulver mit einem Massengehalt von 5 bis 35 % des Gesamtgewichts der Silikonkautschukzusammensetzung vorliegt.

3. Expandierbare Membran für Vulkanisationsformwerkzeug nach einem der Ansprüche 1 bis 2, wobei es sich bei der Mischung von vernetzbaren Organopolysiloxanen um eine Mischung von einem ersten flüssigen Organopolysiloxan und einem zweiten flüssigen Organopolysiloxan handelt, wobei das erste Organopolysiloxan (R₂SiO_{2/2})-Wiederholungseinheiten aufweist und zwei Kettenenden, die jeweils eine Alkenylgruppe, vorzugsweise eine Vinylgruppe, tragen, aufweist, wobei das zweite Organopolysiloxan (R'HSiO_{2/2})-Wiederholungseinheiten aufweist und zwei Kettenenden, die jeweils eine SiR'₃O_{1/2}-Gruppe tragen, aufweist, wobei die Symbole R, die gleich oder verschieden sein können, für eine Alkyl-, Aryl- oder Aralkylgruppe stehen, wobei die Symbole R', die gleich oder verschieden sein können, für eine Alkylgruppe stehen.

4. Expandierbare Membran für Vulkanisationsformwerkzeug nach Anspruch 3, wobei es sich bei dem ersten Organopolysiloxan um ein Polydialkylsiloxan, vorzugsweise ein Polydimethylsiloxan, handelt und es sich bei dem zweiten Organopolysiloxan um ein Polyhydromethylsiloxan handelt.

5. Expandierbare Membran für Vulkanisationsformwerkzeug nach einem der Ansprüche 1 bis 4, wobei die Mischung von vernetzbaren Organopolysiloxanen mehr als 50 Massen-% der Silikonkautschukzusammensetzung ausmacht.

6. Expandierbare Membran für Vulkanisationsformwerkzeug nach einem der Ansprüche 1 bis 5, wobei die Silikonkautschukzusammensetzung ein hydrophobes Siliciumdioxid enthält.

7. Expandierbare Membran für Vulkanisationsformwerkzeug nach Anspruch 6, wobei das hydrophobe Siliciumdioxid in der Silikonkautschukzusammensetzung mit einem Massengehalt größer oder gleich 5 % des Gesamtgewichts der Silikonkautschukzusammensetzung und kleiner oder gleich 40 % des Gesamtgewichts der Silikonkautschukzusammensetzung vorliegt.

8. Expandierbare Membran für Vulkanisationsformwerkzeug nach einem der Ansprüche 1 bis 7, wobei die Silikonkautschukzusammensetzung Polyamid-Mikroteilchen mit einer Schmelztemperatur von mehr als 100 °C enthält.

9. Expandierbare Membran für Vulkanisationsformwerkzeug nach Anspruch 8, wobei die Polyamid-Mikroteilchen eine Schmelztemperatur von mehr als 150 °C aufweisen.

10. Expandierbare Membran für Vulkanisationsformwerkzeug nach einem der Ansprüche 8 bis 9, wobei der Massengehalt der Polyamid-Mikroteilchen größer oder gleich 5 % des Gesamtgewichts der Silikonkautschukzusammensetzung und kleiner oder gleich 15 % des Gesamtgewichts der Silikonkautschukzusammensetzung beträgt.

11. Verfahren zur Herstellung eines Reifens, das die Vulkanisation eines Reifenrohmantels in einem Vulkanisationsformwerkzeug, das mit einer expandierbaren Membran gemäß einem der Ansprüche 1 bis 10 ausgestattet ist, umfasst.

## Claims

1. Expandable bladder for curing mould, which bladder consists wholly or partly of a laminate comprising a first layer of a diene rubber composition and a second layer of a silicone rubber composition, the second layer directly covering the first layer, the first layer and the second layer being crosslinked, the diene rubber composition constituting the first layer comprising a butyl rubber, the silicone rubber composition comprising a micrometre-sized silicone powder and a mixture of crosslinkable organopolysiloxanes, the micrometre-sized silicone powder consisting of crosslinked silicone rubber microparticles covered with a silicone resin, the silicone resin being a polyorganosilsesquioxane.

2. Expandable bladder for curing mould according to Claim 1, wherein the micrometre-sized silicone powder is present in a mass fraction of 5% to 35% of the total weight of the silicone rubber composition.

3. Expandable bladder for curing mould according to any one of Claims 1 to 2, wherein the mixture of crosslinkable organopolysiloxanes is a mixture of a first liquid organopolysiloxane and a second liquid organopolysiloxane, the first organopolysiloxane having repeating units (R₂SiO_{2/2}) and having two chain ends each bearing an alkenyl group, preferably a vinyl group, the second organopolysiloxane having repeating units (R'HSiO_{2/2}) and having two chain ends each bearing a group SiR'₃O_{1/2}, the symbols R, which are identical or different, representing an alkyl, aryl or aralkyl group, and the symbols R', which are identical or different, representing an alkyl group.

4. Expandable bladder for curing mould according to Claim 3, wherein the first organopolysiloxane is a polydialkylsiloxane, preferably a polydimethylsiloxane, and the second organopolysiloxane is a polyhydromethylsiloxane.

5. Expandable bladder for curing mould according to any one of Claims 1 to 4, wherein the mixture of crosslinkable organopolysiloxanes represents more than 50% by mass of the silicone rubber composition.

6. Expandable bladder for curing mould according to any one of Claims 1 to 5, wherein the silicone rubber composition contains a hydrophobic silica.

7. Expandable bladder for curing mould according to Claim 6, wherein the hydrophobic silica is present in the silicone rubber composition in a mass fraction of greater than or equal to 5% of the total weight of the silicone rubber composition and less than or equal to 40% of the total weight of the silicone rubber composition.

8. Expandable bladder for curing mould according to any one of Claims 1 to 7, wherein the silicone rubber composition contains polyamide microparticles which have a melting point above 100°C.

9. Expandable bladder for curing mould according to Claim 8, wherein the polyamide microparticles have a melting point above 150°C.

10. Expandable bladder for curing mould according to any one of Claims 8 to 9, wherein the mass fraction of the polyamide microparticles is greater than or equal to 5% of the total weight of the silicone rubber composition and less than or equal to 15% of the total weight of the silicone rubber composition.

11. Process for manufacturing a tyre, which comprises the curing of a green casing of a tyre in a curing mould equipped with an expandable bladder defined according to any one of Claims 1 to 10.
